# EUROPEAN PATENT SPECIFICATION

(11) **EP 2 796 213 B1**
(45) Date of publication and mention of the grant of the patent: **08.06.2016**
(21) Application number: 11878107.9
(22) Date of filing: 22.12.2011
(51) Int. Cl.: B09B 3/00, B09B 5/00, C10L 5/46, B03B 9/06

(54) **METHOD FOR CONTINUOUS TREATMENT OF MUNICIPAL SOLID WASTE**
VERFAHREN ZUR KONTINUIERLICHEN BEHANDLUNG VON FESTSTOFFHAUSMÜLL
PROCÉDÉ DE TRAITEMENT EN CONTINU DES RÉSIDUS SOLIDES URBAINS

(43) Date of publication of application: 29.10.2014
(73) Proprietor: Masias Recycling, S.L., 17857 Sant Joan Les Fonts (Girona) (ES)
(72) Inventor: SALA LLADÓ Jordi, 17857 Sant Joan Les Fonts (Girona) (ES)
(74) Representative: Gallego Jiménez, José Fernando
(86) International application number: PCT/ES2011/000370
(87) International publication number: WO 2013/093123

(56) References cited:
- EP-A1- 0 237 689
- WO-A1-2008/040396
- WO-A1-2011/128918
- WO-A1-2011/128918
- ES-A1- 2 086 264
- ES-A1- 2 086 264
- ES-A1- 8 406 235
- ES-A6- 2 008 608
- GB-A- 2 444 239
- GB-A- 2 444 239
- US-A- 4 113 185
- US-A- 4 113 185

## Description

### Object of the invention

The present invention relates to a process for the treatment of municipal solid waste that presents some features that are aimed at achieving energy recovery from said waste, in which it refers to the "plastic" part - actual SRFs solid recovered fuels-; and in particular the organic part of them.

### Technical field of the invention

This invention is applicable in the field of treatment and energy recovery of municipal solid waste.

### Background of the invention

Currently, in treatment plants of municipal solid waste, the waste is subjected to a separation process for organic and inorganic matter/plastic contained therein.

Subsequently, the possible metals contained in the organic matter are extracted and the organic matter goes through a process of composting, fermentation and maturation in batches, which can be carried out through methanisations, composting tunnels or windrow composting to be able to be used and considered as compost.

The separation of the organic fraction from the MSW is generally performed by a mechanical separation system or sieving by screening trommels and/or star or plate separators in order to perform the subsequent composting of the separated organic matter.

In other cases, as in the document ES 2 172 459 B1 a process for treating municipal solid waste is described, which facilitates the mixing and the separation into fractions of said waste in order to subsequently subject the organic fraction to composting. In this case the procedure in question provides: - a first grinding stage in which the respective shredder includes at least two low speed axes of revolution with hydraulic drive of the rotors and the possibility of different rates of rotation; and - a second fraction separation step that employs fractions separator discs whose inclinations may be adjusted. Document ES 2 086 264 A1 discloses for treating municipal waste in which the waste are sterilized in order to avoid degradation of organic part. Document US 4 113 185 A discloses a process whereby municipale refuse is treated to produce fuel. This process includes a step of forming a slurry prior to a drying step.

### Description of the invention

The objective of the present invention is to achieve a continuous treatment process that ensures the maximum separation between organic and inorganic products and to then treat the organic product in a completely different way to that which is currently being used, not from a fermentation process and maturation point of view, which are designed for generating compost, but with the idea of achieving a fiber-removed cellulose part that is mixed with the already slightly degraded organic part, which can be used as a bio-fuel product Bio-SRF and even be considered as biomass after obtaining a uniform particle size and continuous drying thereof until a moisture content of no higher than 20% is achieved.

To this end and according to the invention, this continuous treatment process of municipal solid waste comprises the following steps:
- the waste entering in bulk in a bag opening, homogenizing and fiber removal from cellulose process, with slight degradation of the organic matter and mixing said organic matter with the fiber-removed cellulose,
- mixing the waste, mechanically sieving said waste with pass-through sizes between 25 and 50 mm, and separating the organic matter (smaller than the cutting section) from the inorganic/plastic material (larger than the cutting section), and
- continuously drying the organic matter until a dry organic matter is obtained, without composting, with a moisture content equal to or lower than 20%.

This process of urban waste treatment provides significant advantages over traditional processes, among which can be mentioned: the continuous waste treatment avoiding the usual discontinuous treatment of composting organic matter; the correct separation of the organic matter from the inorganic matter, and obtaining from the organic matter a dry organic matter without composting.

This last advantage is of great importance for the proposed aims since, as the organic matter is not composted, the level of degradation is much lower than it would have after a full fermentation and maturation process, and in turn the structure of the said organic matter, especially the carbon-carbon bonds, are much less affected by this degradation; so that the heating value (LHV) of dry organic matter obtained is much higher.

This dry organic matter can be of great interest in various industries, such as cement factories, as a substitute fuel product because such dry organic matter can be labelled green, i.e., free of carbon emissions; which is an advantage and a significant cost saving for cement factories not only because of the differential in purchase price with respect to petroleum products but also because of the non-emissions and the subsequent freedom from environmental penalties.

This dried organic matter without composting can also be considered as a biomass and used in biomass processing plants.

## Claims

1. A method for continuous treatment of municipal solid waste; **characterized in that** it comprises:
- the waste entering in bulk in a bag opening, homogenizing and fiber removal from cellulose process, with slight degradation of the organic matter, and mixing said organic matter with the fiber-removed cellulose,
- mixing the waste, mechanically sieving said waste with pass-through sizes between 25 and 50 mm, and separating the organic matter smaller than the sieving section and the inorganic/plastic matter larger than the sieving section, and
- continuously drying the organic matter until a dry organic matter is obtained, without composting, with a moisture content equal to or lower than 20%.

## Patentansprüche

1. Verfahren zur kontinuierlichen Behandlung von Feststoffhausmüll, **dadurch gekennzeichnet, dass** es umfasst:
- Eintreten des Mülls als Masse in einem Beutel in einen Prozess des Öffnens, Homogenisierens und der Faserentfernung aus Cellulose mit geringfügigem Abbau des organischen Materials und Mischen des organischen Materials mit der entfaserten Cellulose,
- Mischen des Mülls, mechanisches Sieben des Mülls mit Durchgangsgrößen zwischen 25 und 50 mm, und Trennen des organischen Materials, das kleiner als der Siebabschnitt ist, und des anorganischen/Kunststoffmaterials, das größer als der Siebabschnitt ist, und
- kontinuierliches Trocknen des organischen Materials, bis ein trockenes organisches Material ohne Kompostieren mit einem Feuchtigkeitsgehalt gleich oder kleiner als 20 % erhalten wird.

## Revendications

1. Procédé de traitement continu de résidus solides urbains ; **caractérisé en ce qu'**il comprend :
- l'entrée des résidus en vrac dans un processus d'ouverture de sac, d'homogénéisation et de retrait des fibres de la cellulose, avec légère dégradation de la matière organique, et mélange de ladite matière organique avec la cellulose dépourvue de fibres,
- le mélange des résidus, tamisage mécanique desdits résidus avec des dimensions de passage entre 25 et 50 mm et séparation de la matière organique plus petite que la section de tamisage et de la matière inorganique/plastique plus grande que la section de tamisage, et
- le séchage continu de la matière organique jusqu'à ce qu'une matière organique sèche soit obtenue, sans compostage, avec une teneur en humidité égale ou inférieure à 20 %.
